Europäisches Patentamt

European Patent Office

Office européen des brevets

(11) Publication number: **0 210 794**
A2

(12) **EUROPEAN PATENT APPLICATION**

(21) Application number: 86305526.5

(22) Date of filing: 17.07.86

(51) Int. Cl.⁴: **G 01 N 27/84**

A request for correction has been filed pursuant to Rule 88 EPC. A decision on the request will be taken during the proceedings before the Examining Division.

(30) Priority: 23.07.85 GB 8518578

(43) Date of publication of application:
04.02.87 Bulletin 87/6

(84) Designated Contracting States:
DE FR GB IT NL SE

(71) Applicant: BP Chemicals Limited
Belgrave House 76 Buckingham Palace Road
London, SW1W 0SU(GB)

(72) Inventor: Longley-Cook, Robert
BP Chemicals LTD. Barry
Sully South Glamorgan CF6 2YU(GB)

(74) Representative: Krishnan, Suryanarayana
Kalyana et al,
BP INTERNATIONAL LIMITED Patents Division Chertsey
Road
Sunbury-on-Thames Middlesex TW16 7LN(GB)

(54) Detection of defects on structures.

(57) The present invention relates to a method for detecting defects in metal structures and welds, especially under-water structures. The method involves applying to the surface of the suspected area of the defective structure a fast curing, cold cure impression material, curing the impression material into a solid cast and lifting off the cured cast as a three dimensional profile of the defect. The impression material may be used in conjunction with a magnetic ink which forms on the defective surface a cluster of magnetic particles, termed "indication", simulating the defect and this "indication" can be lifted off on a cast of the impression material as previously. The preferred impression material is maleinised polybutadiene.

EP 0 210 794 A2

Croydon Printing Company Ltd.

1

# DETECTION OF DEFECTS ON STRUCTURES

The present invention relates to a method for detecting defects in metal structures and welds.

Metal structures and welds are invariably subjected to stress and fatigue conditions which give rise to the development of cracks or breaks internally or on the surface. The problem of such defects whether internal or external is even more acute in under-water or sub-sea structures which have to contend additionally with problems of corrosion.

Hitherto magnetic particle inspection has been used extensively to detect such defects especially in metal structures under water. This method relies on the fact that when a metal is magnetised, iron particles will be attracted to any change of flux of that field such as that caused by a defect whether internal or external. A cluster of these magnetic particles around a defect is termed an "indication" in the art. If a fluorescent dye is impregnated on the iron particles to produce the so-called "magnetic ink", then any particle clusters formed can be inspected by their fluorescence e.g. under UV light.

In the case of under-water structures a record of the "indication" is normally produced by a diver who photographs the "indication". This method, although useful, fails to produce a three-dimensional profile of the affected or defective area of a structure. Moreover, the diver has to be trained in the techniques involving knowledge of magnetic fields and flux, the art of applying the magnetic ink, visual appreciation of the nature and the extent of the damage to the affected area of the structure and finally ultraviolet photography of the surface treated with the normally fluorescent magnetic ink. In addition such UV photography has of necessity to be carried out under cover of darkness.

The absence of a three-dimensional profile of the affected area of the structure reduces the ability of the experts scrutinising the UV photograph to assess the damage accurately. Moreover, the need to carry out UV photography under darkness reduces considerably the flexibility of the operation.

In an article by R. Purdy in the Journal "Non-Destructive Testing", Nov 1968, pp 363-369 a replica technique for recording magnetic particle indications is described. However, Purdy found that cold curing rubbers took too long to cure, e.g. 12 hours, and resorted to heat curable resins such as PVC. GB-A-934116 describes the use of PVC for a similar purpose and also employs a heat curing process. The heat curing process, however, was unsuccessful with fluorescent inks as the plasticiser component of the PVC paste absorbed the dye. The problem of slow cure or heat application is even more acute for under-water uses.

It is an object of the present invention to devise a method of producing three-dimensional profiles of the area of a structure which has actual or suspected damage, especially under-water which will not only enable the operation to be carried out during daylight hours but can also be achieved in a very short time.

Accordingly, the present invention is a method of producing a three-dimensional profile of a surface of a ferro- or para-magnetic structure, said method comprising

(a) subjecting the surface to a magnetic flux;

(b) applying substantially uniformly on the surface magnetic particles which are visually distinct or are capable of being visually distinguished when superimposed on a fast curing, cold-cure impression material, whereby the magnetic particles rearrange into clusters under the influence of the flux;

(c) applying on the clusters so formed the impression material capable of being cured into a solid resilient cast, said cast having the ability to lift the clusters of the magnetic particles from the surface by entrapment without substantially disturbing or distorting the pattern of the cluster formation and being capable of removal from the surface after curing;

(d) curing the impression material into a solid resilient cast whereby the clusters of the magnetic particles are held in and/or on the cast, and finally

(e) removing the cast impregnated with the magnetic particles from the surface.

By "fast curing, cold cure impression material" is meant a material which under ambient conditions of temperature (4-35°C) and pressure is capable of achieving adequate cohesive strength to enable said material to be peeled clean off a surface on which it is applied within 30 minutes of application without recourse to any external source of heat. Such impression materials in the context of the present invention are the so-called liquid rubbers (also known as liquid reactive rubbers) which are capable of being cured under the influence of catalysts, setting agents, radiation and the like at ambient temperatures.

The surface of the structure which is actually damaged or suspected of damage may be of any shape or size. For instance it may be part of a pipe, tube, rod, cylinder etc of circular, triangular, rectangular or polygonal cross-section provided that it is ferromagnetic or paramagnetic. Thus the surface may be of iron, cobalt, nickel or some alloys thereof.

The magnetic particles should be visually distinct in a background of the fast curing, cold cure impression material on which it is superimposed. The visual distinction may be inherent in the magnetic particles used or may be induced by an external aid, e.g. by fixing thereto a dye which fluoresces in UV light. Thus, the magnetic particles may be used as such or after fixing thereto a UV fluorescent dye. The fluorescent dye may be fixed on the magnetic particles by impregnation or dispersion of the particles in a solution of the dye. Particles having a fluorescent dye affixed thereto are the so-called "magnetic inks" and such particles can be distinguished from the background impression material by exposure to UV light.

The magnetic ink is suitably particles of paramagnetic or ferromagnetic metal to which the fluorescent dye is fixed. Specific examples of such magnetic metal particles include inter alia iron, cobalt, nickel or magnetic alloys thereof. Specific examples of magnetic inks having the fluorescent dyes affixed thereto include inter alia materials which are commercially sold under trade names such as Magnaglow (Registered Trade Mark) and Lumor (Registered Trade Mark).

A feature of the invention is that it can detect actual or potential damage to or defect on an area of a structure, whether internal or external, by monitoring the cluster patterns formed by the magnetic particles on the structure surface above the suspected area under the influence of a magnetic flux.

The magnetic particles are applied on the surface above the area of suspected or actual damage after the latter is subjected to a magnetic flux. The magnetic particles may be in the form of a suspension or dispersion in a liquid, in a semi-solid or solid particulate form provided that it can be spread uniformly on that surface.

The magnetic particles are allowed sufficient time to migrate in a manner so as to simulate the defects or damaged areas e.g. cracks, fractures etc, if any, whether on the surface or internal by rearranging into clusters on the surface following the pattern of the damage, if any. Thereafter, the fast curing, cold cure impression material is applied on the surface and cured, care being taken not to disturb or distort the pattern of any damage represented by the clusters.

The fast, cold curing impression material used is suitably paste-like in character with a viscosity chosen such that the material will conform to the surface from which the pattern formed by the magnetic particles are to be lifted while not flowing away from the area under inspection. The viscosity is suitably in the range of 500-1500 poise at ambient temperature of use.

The fast curing, cold cure impression material applied to the surface is then cured into a solid resilient cast.

The fast curing, cold cure impression material used should be such that it is strong in thin sections and adequately elastic to enable removal thereof from the surface after curing without any significant distortion of either the impression or the cluster pattern. Also if the affected area is an under-water structure, the fast curing, cold cure impression material should be stable and should be capable of being cured into a solid resilient cast under ambient conditions suitably within 60 minutes, preferably within 30 minutes. The fast curing, cold cure impression material should even more preferably be capable of being cured in an aqueous environment. Examples of such fast curing, cold cure materials include liquid rubbers such as polysulphide rubbers, polyether rubbers, silicone rubbers and maleinised polybutadiene rubbers.

A further feature of the present invention is that the use of the fast curing, cold cure impression material enables detection of defects, actual or potential, internal or external, on an under-water structure with or without the use of the magnetic particles. Where the fast curing, cold cure impression material is used alone without the magnetic particles, a replica of the defect can be seen on the cured cast of the impression material.

In this case, the same impression materials as defined above can be used. Whether or not the magnetic particles are used the preferred impression material is maleinised polybutadiene. Where magnetic inks are used the mode of use is the same both for under-water and surface uses.

Thus according to a further embodiment the present invention is a method of producing three-dimensional profiles of defects on and/or damage to a surface of an under-water structure, said method comprising applying to the surface an impression material comprising maleinised polybutadiene (MPBD) and curing the applied MPBD into a solid resilient cast and removing the cured cast as a three-dimensional profile of the defect and/or damage.

The fast curing, cold cure impression materials referred to above may have blended therein fillers, plasticizers, diluents or catalysts. The impression materials may be cured as such using radiation techniques or by using suitable catalysts and/or setting agents provided that the means of curing used is such that the rubber cures within the specified duration of 60 minutes specified above. Such techniques are well known to those skilled in the art. In the case of MPBD, which is a liquid having a viscosity of about 1500 cps at 25 °C, the setting agents include amines, especially polyamines; polyols; amides, especially polyamides; alkanolamines; and alkanolamides.

In this case alkanolamines e.g. triethanolamine, or their salts with carboxylic acids used alone or in admixture with polyols are preferred as the setting agents.

Catalysts may be used in addition to the setting agents in the case of fast, cold curing impression materials of the MPBD type. The catalysts facilitate the reaction of the anhydride groups in MPBD with the setting agents referred to above. The catalysts may for instance be any one of primary, secondary or tertiary amines, their salts and quarternary ammonium compounds. If an alkanolamine or a salt thereof is used as the catalyst it may function both as a catalyst and as a setting agent.

The fast curing, cold cure impression materials and the relevant setting agents and catalysts used in the present invention may be mixed prior to application either mannually, using e.g. a pallete knife and pallete, or by a static or dynamic mixer supplied from a dispensing device. The fast curing, cold cure impression materials and the setting agents/catalysts may be applied simultaneously on the surface by means of a coaxial dispensing device capable of discharging the two components simultaneously from a single nozzle. An example of such a device is a coaxial cartridge dispensing gun commercially sold under the name Supermix II by the Liquid Control Corporation of Ohio. The fast curing, cold cure impression material may contain such additional components as may be desirable to control the viscosity or rate of curability of said material. Examples of such components include fillers.

The present invention is further illustrated with reference to the following Examples.

Sources of Materials Used:

OMNIFLEX* (fast set polysulphide rubber) - Coe Laboratories Inc, Chicago IMPREGNUM F* (Polyether rubber) - EPSE GmbH REPROSIL* (Silicone rubber) - Bayer AG AQUAPRINT* (Maleinised Polybutadiene) - BP Chemicals Ltd

*Registered Trade Mark

Example 1

A small sample butt weld was prepared and a simulated defect was incorporated into the weld cap. The sample was placed in a water filled test-tank and standard magnetic particle inspection procedure was carried out using Magnaglow 20A (Registered Trade Mark) magnetic ink prepared as per manufacturers' instructions. A significant 'indication' of the defect was obtained under the influence of a magnetic flux.

With the magnetic flux still in place, Aquaprint (a maleinised polybutadiene, Trade Mark Registration applied for) was evenly applied over the defective area using a Supermix II, coaxial cartridge dispensive system (sold by Liquid Control Corp).

After 15 minutes the magnetic flux was removed, the Aquaprint was fully cured and the cured solid cast peeled off the surface of the weld cap.

On visual inspection of the cast under UV light it was found that the pattern of the clusters formed by the magnetic particles and representing the defect had been retained undistorted on the solid cast of Aquaprint.

Example 2

An evaluation according to the procedure of Example 1 was carried out using Magnaflux UWI (Registered Trade Mark) ink and with the test tank water temperature controlled at 15°C.

Omniflex fast set (a polysulphide rubber) was manually premixed according to the manufacturers instructions prior to application over the defective area. On removal after 45 minutes the undistorted pattern of magnetic particle clusters could be observed under UV light on the solid rubber cast.

Example 3

An evaluation according to the procedure of Example 2 was carried out using Magnaglow 405 (Registered Trade Mark) ink and Impregnum F (a polyether rubber) with the test tank water temperature controlled at 15°C. The solid rubber cast was removed from the surface after 20 minutes and shown under UV light to have retained undistorted the pattern of magnetic particle clusters.

Example 4

An evaluation according to the procedure of Example 2 was carried out using Lumor 4X (Registered Trade Mark) ink and Reprosil (a silicon rubber) with the test tank water temperature controlled at 22°C. The solid rubber cast was removed from the surface after 25 minutes and shown to have retained undistorted the pattern of magnetic particle clusters.

Example 5

An evaluation according to the procedure of Example 1 was carried out with the test tank water temperature controlled at 5°C. The solid cast of Aquaprint was removed after 15 minutes and shown to have retained undistorted the pattern of magnetic particle clusters.

Example 6

Standard magnetic particle inspection was carried out in air at 20°C on the sample weld of Example 1 using Lumor 4X (Registered Trade Mark) magnetic ink prepared according to the manufacturers instructions. Omniflex fast set (a polysulphide rubber) was manually premixed according to the manufacturers instructions prior to application over the defective area with the magnetic flux still in place. After 15 minutes the magnetic flux was removed and the solid rubber cast peeled off the weld surface.

Visual inspection of the cast under UV light showed that the pattern of clusters formed by the magnetic particles had been retained undistorted on the solid cast.

Example 7

The procedure of Example 6 was followed using Lumor 4X (Registered Trade Mark) ink and Aquaprint dispensed from a Supermix II cartridge dispensing system. On removal from the weld surface after 15 minutes it was shown that the magnetic particle clusters had been retained undistorted on the solid cast.

Example 8

The procedure of Example 6 was followed at an air temperature of 30°C using Lumor 4X (Registered Trade Mark) ink and Reprosil (a silicone rubber). On removal from the weld surface after 15 minutes the magnetic particle clusters could be seen in UV light to have been retained undistorted on the cast.

Example 9

The procedure of Example 6 was followed at an air temperature of 10°C using Supramor 4 Black (Registered Trade Mark) ink and Impregnum (a polyether rubber). On removal from the weld surface after 25 minutes it was shown under visible light that the magnetic particle clusters had been retained undistorted on the cast.

Example 10

A node, consisting of 500 MM pipes welded into a cross, was suspended in a tank of water. A diver carried out magnetic particle inspection on the node using Lumor (Registered Trade Mark) magnetic ink and detected a stress crack under the influence of a magnetic flux induced thereon by magnetic coils.

With the magnetic coils still live, Aquaprint (a maleinised polybutadiene, Trade Mark Registration applied for) was applied evenly over the affected area of the node using a Supermix II coaxial cartridge dispensive system (sold by Liquid Control Corp).

When, after 10 minutes, the Aquaprint was fully cured into a solid, resilient cast, the magnetic coils were turned off and the cured cast peeled off the surface of the weld.

On visual inspection of the cast under UV light it was found that the pattern of clusters formed by the magnetic particles and representing the stress crack had been retained undistorted on the cured solid cast of Aquaprint.

Claims:

1. A method of producing a three-dimensional profile of a surface of a ferro- or para-magnetic structure, said method comprising

(a) subjecting the surface to a magnetic flux;

(b) applying substantially uniformly on the surface magnetic particles which are visually distinct or are capable of being visually distinguished when superimposed on a fast, cold curing impression material, whereby the magnetic particles rearrange into clusters under the influence of the flux;

(c) applying on the clusters so formed the fast curing, cold cure impression material capable of being cured into a solid resilient cast, said cast having the ability to lift the clusters of the magnetic particles from the surface by entrapment without substantially disturbing or distorting the pattern of the cluster formation and being capable of removal from the surface after curing;

(d) curing the fast curing, cold cure impression material into a solid resilient cast whereby the clusters of the magnetic particles are held in and/or on the cast, and finally

(e) removing the cast impregnated with the magnetic particles from the surface.

2. A method according to claim 1 wherein the magnetic particles used have affixed thereto a UV fluorescent dye by impregnation or dispersion of the particles in a solution of the dye.

3. A method according to claim 1 or 2 wherein the magnetic particles are selected from iron, cobalt, nickel and magnetic alloys thereof.

4. A method according to any one of the preceding claims wherein the magnetic particles are in the form of a suspension or dispersion in a liquid, in a semi-solid or solid particulate form and is capable of being spread uniformly on the surface.

5. A method according to any one of the preceding claims wherein the fast curing, cold cure impression material is a liquid rubber.

6. A method according to any one of the preceding claims wherein the fast curing, cold cure impression material used is a liquid rubber selected from polysulphide rubbers, polyether rubbers, silicone rubbers and maleinised polybutadiene rubbers.

7. A method of producing three-dimensional profiles of defects on and/or damage to a surface of an under-water structure, said method comprising applying to the surface a fast curing, cold cure impression material capable of being cured into a solid resilient cast, said cast having the ability to form a replica of the defect which remains undistorted when lifted off from the surface of the under-water structure, curing the applied impression material into a solid resilient cast and removing the cured cast as a three-dimensional profile of the defect and/or damage.

8. A method according to claim 7 wherein the fast curing, cold cure impression material is maleinised polybutadiene.

9. A method of producing a three-dimensional profile of a surface of a ferro- or para-magnetic under-water structure according to claims 7 or 8, said method comprising

(a) subjecting the surface to a magnetic flux;

(b) applying substantially uniformly on the surface magnetic particles which are visually distinct or are capable of being visually distinguished when superimposed on a fast, cold curing impression material, whereby the magnetic particles rearrange into clusters under the influence of the flux;

(c) applying on the clusters so formed the fast curing, cold cure impression material capable of being cured into a solid resilient cast, said cast having the ability to lift the clusters of the magnetic particles from the surface by entrapment without substantially disturbing or distorting the pattern of the cluster formation and being capable of removal from the surface after curing;

(d) curing the fast curing, cold cure impression material into a solid resilient cast whereby the clusters of the magnetic particles are held in and/or on the cast, and finally

(e) removing the cast impregnated with the magnetic particles from the surface.

10. A method according to any one of the preceding claims wherein the fast curing, cold cure impression materials have blended therein fillers, plasticizers, diluents or catalysts.

11. A method according to any one of the preceding claims wherein the fast curing, cold cure impression material is cured as such using radiation techniques or by using catalysts and/or setting agents.

12. A method according to claim 11 wherein a cast of maleinised polybutadiene is cured using a setting agent selected from amines, polyols, amides, polyamides, alkanolamines and alkanolamides.

13. A method according to claim 12 wherein the setting agent is triethanolamine or a salt thereof with carboxylic acids either used alone or in admixture with polyols.

**0210794**

Patents and Agreements Division, Chertsey Road, Sunbury-on-Thames, Middlesex TW16 7LN

European Patent Office,
Directorate General 2,
Erhardstrasse 27,
D-8000 Munchen 2,
GERMANY

| Our reference | Your reference | Telephone Sunbury-on-Thames 781234 Ext | Date |
|---|---|---|---|
| PAT/SKK/KAC | | 2734 | 24th September 1986 |

Dear Sirs,

Re: New Patent Filing 86305526.5
    Our Case 6164 (080)

We recently sent you instructions to file patent applications in the above context.

Since sending these instructions some minor typographical errors have come to our attention. Please insert the following corrections (noted with respect to the English text) in the specification at your earliest convenience.

Page 4, line 9  - MAGNAGLO (no w)
Page 7, line 6  - IMPREGUM
Page 7, line 31 - MIGLO uwi (not Magnaflux)
Page 7, line 6  - ESPE
Page 7, line 7  - Reprosil (Silicone Rubber) - DE TREY AG (not
                  Bayer AG)
Page 8, line 5  - Magnaglo (no w)
Page 8, line 6  - IMPREGUM
Page 9, line 16 - IMPREGUM

Yours faithfully,

S.K. KRISHNAN
Patents (Chemicals) Branch

EPA EPO-OEB
DG 1
Reçu:
0 9 OCT. 1986

NDUSTRY EAR 1986  Registered office: Britannic House Moor Lane London EC2Y 9BU  Registered in England No. 542515  Fax No: (0932) 762999 Telex No: 296041 (A/B BPSUNA G)